# NEUE EUROPÄISCHE PATENTSCHRIFT

(11) **EP 4 085 794 B2**
(45) Veröffentlichungstag und Bekanntmachung des Hinweises auf die Entscheidung über den Einspruch: **22.10.2025**
(45) Hinweis auf die Patenterteilung: 12.04.2023
(21) Anmeldenummer: 21172699.7
(22) Anmeldetag: 07.05.2021
(51) Int. Cl.: A46D 1/00, A46D 3/08

(54) **VERFAHREN ZUR VORBEREITUNG UND DURCHFÜHRUNG EINER QUALITÄTSPRÜFUNG VON BÜRSTEN, INSBESONDERE VON ZAHNBÜRSTEN, PRÜFVORRICHTUNG UND BÜRSTENHERSTELLUNGSMASCHINE**
METHOD FOR TESTING THE QUALITY OF BRUSHES, IN PARTICULAR TOOTHBRUSHES, TESTING DEVICE AND BRUSH MAKING MACHINE
PROCÉDÉ DE VÉRIFICATION DE QUALITÉ DES BROSSES, EN PARTICULIER BROSSES À DENTS, DISPOSITIF DE VÉRIFICATION ET MACHINE DE FABRICATION DE BROSSES

(43) Veröffentlichungstag der Anmeldung: 09.11.2022
(73) Patentinhaber: Zahoransky AG, 79674 Todtnau (DE)
(72) Erfinder: Wassmer, Felix, 79659 Schopfheim (DE); Schmid, Urs, 79674 Todtnau (DE)
(74) Vertreter: Mertzlufft-Paufler, Cornelius

(56) Entgegenhaltungen:
- EP-A1- 3 150 082
- EP-A2- 0 189 067
- EP-A2- 2 210 521
- WO-A1-00/10425
- DE-A1- 10 123 329
- DE-A1- 102009 005 708
- DE-A1- 102018 214 307
- DE-U1- 8 414 080
- US-A- 6 092 059
- US-A1- 2020 005 069
- ANONYMOUS: "GETTING STARTED WITH A DEEP LEARNING FACTORY AUTOMATION PROJECT", ISOTRON SYSTEMS COGNEX, 1 April 2021 (2021-04-01), XP093183703, Retrieved from the Internet <URL:https://cdn.i-pulse.nl/isotron/production/products/3761/ebook-deep-learning-project-guide-iso-.pdf>
- ANONYMOUS: "CONTACT - Das ZAHORANSKY Kundenmagazin", CONTACT - DAS ZAHORANSKY KUNDENMAGAZIN, 1 January 2016 (2016-01-01), XP093183706, Retrieved from the Internet <URL:https://www.zahoransky.com/files/inhalt/download/pdfs/Contact/Contact_Digital_01-2016_D.pdf>
- ANONYMOUS: "Klassifikator", WIKIPEDIA, 17 November 2020 (2020-11-17), XP093183707, Retrieved from the Internet <URL:https://de.wikipedia.org/w/index.php?title=Klassifikator&oldid=205622420>
- ANONYMOUS: "Künstliches neuronales Netz", WIKIPEDIA, 6 May 2021 (2021-05-06), XP093183709, Retrieved from the Internet <URL:https://de.wikipedia.org/w/index.php?title=Künstliches_neuronales_Netz&oldid=211666812>
- ANONYMOUS: "Künstliche Intelligenz", WIKIPEDIA, 4 May 2021 (2021-05-04), XP093183712, Retrieved from the Internet <URL:https://de.wikipedia.org/w/index.php?title=Künstliche_Intelligenz&oldid=211587686>

## Beschreibung

Die Erfindung betrifft ein Verfahren zur Vorbereitung und Durchführung einer Qualitätsprüfung von Bürsten, insbesondere von Zahnbürsten und/oder Rundbürsten, sowie eine Bürstenherstellungsmaschine.

Die Anforderungen an die Qualität von Bürsten sind in den vergangenen Jahren immer weiter gestiegen. Zusätzlich ist die Produktion von Bürsten einem erheblichem Kostendruck ausgesetzt. Daher wächst der Bedarf, die Verfahren zur Herstellung von Bürsten immer weiter zu verbessern. Ein wesentlicher Aspekt hierbei ist eine zuverlässige und möglichst einfache Qualitätsprüfung der Bürsten.

Aus der EP 3 150 082 A1 ist ein Verfahren zum Quantifizieren eines Abnutzungsgrads eines Borstenfelds einer Bürste vorbekannt, die eine Vielzahl von Borstenbüschel umfasst, die jeweils eine Vielzahl einzelner Borsten gruppieren, wobei die Borstenbüschel über das Borstenfeld verteilt sind. Das Verfahren umfasst die folgenden Schritte:
- Aufzeichnen und Speichern eines Bilds des Borstenfelds;
- Konvertieren des Bilds in ein Graustufenbild mithilfe von digitaler Bildverarbeitung und Speichern des Graustufenbilds;
- Konvertieren des Graustufenbilds in mindestens ein binarisiertes Bild mit nur zwei Farbtonwerten mithilfe von digitaler Bildverarbeitung, dadurch Zuweisen eines Farbtonwerts zu Borsten und/oder Borstenbüscheln, die in dem Bild sichtbar sind, und des anderen Farbtonwerts zu dem Hintergrund in dem Bild, der nicht Borsten oder Borstenbüschel zeigt, und Speichern des binarisierten Bilds;
- Anwenden mindestens eines der folgenden Bewertungsverfahren:
   (a) Bestimmen der geometrischen Spreizung des Borstenfelds durch Erzeugen eines Konturenbilds aus dem binarisierten Bild mit den Konturenpixeln des Borstenfelds und Verwenden der Koordinaten der Konturenpixel zum Bestimmen der maximalen Bürstbreite und -länge des Borstenfelds und/oder durch Erzeugen einer konvexen Hülle, die alle Konturenpixel umgibt und die kleinstmögliche Größe aufweist, um die Fläche und den Umfang des Borstenfelds zu bestimmen;
   (b) Bestimmen der Filamentoberfläche aller sichtbaren Borsten in dem Bild durch Zählen der Pixel in dem binarisierten Bild mit dem einen Farbtonwert des binarisierten Bilds, der Borsten und/oder Borstenbüscheln zugewiesen ist;
   (c) Bestimmen der Borstenbüschelintegrität in dem Bild durch Zählen trennbarer Büschel in dem Graustufenbild durch Identifizieren lokaler Grauwertmaxima in dem Graustufenbild, wahlweise nach dem Trennen der Borstenbüschel, durch Substrahieren einer Maske des binarisierten Bilds, die durch Konvertierung des Graustufenbilds in das mindestens eine binarisierte Bild erzeugt wurde, das die Borstenbüschel identifiziert.
- Vergleichen der Ergebnisse des mindestens einen angewendeten Bewertungsverfahrens mit Referenzdaten einer unbenutzten Bürste und/oder von benutzten Bürsten mit bestimmten Abnutzungsgraden, um den Abnutzungsgrad des Borstenfelds zu klassifizieren.

Aus der DE 84 14 080 U1 ist eine Bürstenherstellungsmaschine mit einer Bohr- und/oder Stopfvorrichtung sowie gegebenenfalls nachgeschalteten, weiteren Bearbeitungsvorrichtungen, z. B. zum Abscheren, zum Abrunden, zum Ausputzen der Borstenbüschel, vorbekannt. Die Bürstenherstellungsmaschine ist dadurch gekennzeichnet, dass den Bearbeitungsvorrichtungen eine Mess- und/oder Prüfeinrichtung zur Endkontrolle der Bürsten zumindest auf Vollständigkeit des Borstenfeldes nachgeschaltet ist. Für eine kontaktlose Überprüfung von gefertigten Bürsten, insbesondere zur Kontrolle des Borstenfeldes, kann bei dieser Bürstenherstellungsmaschine eine optoelektronische Vorrichtung zumindest mit einer Aufnahmekamera sowie einer damit verbundenen Auswerte- und Speichereinrichtung vorgesehen sein. Mit Hilfe der Aufnahmekamera kann zunächst das Bild einer fehlerfreien Bürste aufgenommen und abgespeichert werden. Beim Kontrollieren der laufenden Bürstenfertigung wird dann das jeweils aufgenommene Bild mit dem abgespeicherten verglichen und falls sich da Differenzen zeigen, wird die entsprechende Bürste ausgeschieden.

Aufgabe der Erfindung ist es, ein Verfahren zur Vorbereitung und Durchführung einer Qualitätsprüfung von Bürsten, eine Prüfvorrichtung und eine Bürstenherstellungsmaschine der eingangs genannten Art bereitzustellen, die eine wirtschaftliche Produktion von Bürsten begünstigen.

Zur Lösung dieser Aufgabe wird zunächst ein Verfahren gemäß Anspruch 1 vorgeschlagen.

Der Klassifikator kann ein Klassifikator einer weiter unten noch näher erläuterten Prüfvorrichtung sein, die ihrerseits Teil einer weiter unten ebenfalls noch näher erläuterten Bürstenherstellungsmaschine sein kann.

Durch die Verwendung eines trainierten Klassifikators wird ein automatisiertes Verfahren zur Qualitätsprüfung von Bürsten bereitgestellt, das eine besonders effektive und wirtschaftliche Qualitätsprüfung von Bürsten ermöglicht.

Dadurch, dass der Klassifikator mit einem Trainingsdatensatz trainiert wird, der Bilder defekter Bürsten aufweist, ist es besonders einfach möglich, den Klassifikator auf bestimmte Bürstenmuster und auf die Erkennung bei diesen Bürstenmustern spezifisch auftretender Defekte zu trainieren. Dadurch ist das Verfahren vergleichsweise flexibel und kann nach einem entsprechenden Training des Klassifikators ohne großen Aufwand auch bei einem Musterwechsel der zu produzierenden und zu prüfenden Bürsten eingesetzt werden.

Bei einer Ausführungsform des Verfahrens ist vorgesehen, dass die Bilder des Trainingsdatensatzes Bürsten zeigen, die zumindest einen Defekt in einem Borstenbesatz und/oder an einem Bürstenkopf und/oder an einem Bürstenkörper und/oder an einem Bürstengriff aufweisen.

Der Trainingsdatensatz mit Bildern von defekten Bürsten kann Bilder umfassen, die zumindest einen bei einem bestimmten Bürstentyp häufig auftretenden Defekt-Typ zeigen. Auf diese Weise ist es möglich, den Klassifikator zielgerichtet auf die Erkennung von Defekten für die Qualitätsprüfung bestimmter Bürsten zu trainieren. Hierbei können insbesondere solche Defekte in den Bildern des Trainingsdatensatzes gezeigt sein, die gegebenenfalls auch den Typ der Bürstenherstellungsmaschine berücksichtigen, der bei der Produktion der Bürsten eingesetzt wird. Bestimmte Bürstenherstellungsmaschinen können dazu neigen, unter bestimmten Bedingungen, insbesondere unter bestimmten Umweltbedingungen und/oder anderen äußeren Faktoren, bestimmte Fehlerbilder zu produzieren.

Unter Berücksichtigung des Typs der Bürstenherstellungsmaschine, der Umgebungsbedingungen und/oder weiterer äußerer Faktoren kann auf diese Weise zielgerichtet ein Trainingsdatensatz mit Bildern defekter Bürsten erzeugt und zum Training des Klassifikators verwendet werden, um einen bestmöglich trainierten Klassifikator zu erhalten, der die Qualitätsprüfung besonders zuverlässig vornehmen kann.

Die Qualität des Klassifikators zur Durchführung der Qualitätsprüfung kann noch weiter gesteigert werden, wenn der Trainingsdatensatz Bilder intakter Bürsten umfasst. Der Klassifikator kann mit einem derartig konfigurierten Trainingsdatensatz mit Bildern sowohl defekter als auch intakter Bürsten besonders schnell und zuverlässig lernen, was eine defekte bzw. was eine intakte Bürste ausmacht. Dies kann das Ergebnis der Klassifikation zu prüfender Bürsten als intakte bzw. als defekte Bürste signifikant verbessern.

Der Klassifikator, der bei der Durchführung des Verfahrens verwendet wird, kann dazu eingerichtet sein, zu prüfende Bürsten anhand von Bildern der Bürsten als intakte Bürsten und/oder als defekte Bürsten zu klassifizieren.

Bei einer Ausführungsform des Verfahrens kann vorgesehen sein, dass aus dem Trainingsdatensatz Merkmale extrahiert werden, die Defekte im Borstenbesatz und/oder am Bürstenkopf und/oder am Bürstenkörper und/oder am Bürstengriff repräsentieren können. Diese extrahierten Merkmale können dann beim Training des Klassifikators verwendet werden; dies insbesondere, weil der Klassifikator ein KI-basierter Klassifikator ist, der beispielsweise zum Machine-Learning oder auch zum Deep-Learning eingerichtet sein kann.

Aus dem Trainingsdatensatz können ferner Merkmale extrahiert werden, die intakte Bürsten repräsentieren. Auch dies kann ein Training des Klassifikators begünstigen, durch das der Klassifikator letztendlich dazu befähigt wird, zu prüfende Bürsten als defekte oder als intakte Bürsten zu klassifizieren.

Bei einer Ausführungsform des Verfahrens ist vorgesehen, dass ein Defekt im Borstenbesatz eine von einer Soll-Form abweichende Form des Borstenbesatzes, eine von einer Soll-Borstendichte abweichende Borstendichte, eine von einer Soll-Ausrichtung von Borsten abweichende Borstenausrichtung, vorzugsweise in Bezug auf einen Bürstenkopf und/oder einen Bürstenkörper und/oder einen Bürsten-Griff und/oder BürstenStiel, und/oder eine von einer Soll-Länge abweichende Borstenlänge und/oder eine von einer Soll-Farbverteilung im Borstenbesatz abweichende Farbverteilung und/oder eine von einer Soll-Farbgebung im Borstenbesatz abweichende Farbgebung ist.

Ein Defekt am Bürstenkopf und/oder am Bürstenkörper und/oder am Bürstengriff und/oder am Bürstenstiel kann ein von einer Soll-Geometrie des Bürstenkopfes und/oder des Bürstenkörpers und/oder des Bürstengriffs und/oder des Bürstenstiels abweichende Ist-Geometrie sein. Die einen Defekt darstellende Ist-Geometrie einer defekten Bürste, deren Bild im Trainingsdatensatz enthalten sein kann, kann beispielsweise eine Delle, Vertiefung, Beschädigung und/oder eine von einer Soll-Oberflächengüte abweichende Oberflächengüte und/oder eine Verformung und/oder eine Verbiegung und/oder eine von einer Soll-Färbung abweichende Färbung sein. Als Oberflächengüte kann beispielsweise eine definierte Oberflächenrauheit vorgegeben sein, die sich anhand beispielsweise eines Reflexions- bzw. Absorptionsverhaltens der Oberfläche bei Bestrahlung der Oberfläche der Bürste, insbesondere des Bürstenkopfes und/oder des Bürstenkörpers und/oder des Bürstengriffes und/oder des Bürstenstiels und/oder des Bürstenkopfes einstellt.

Der Trainingsdatensatz kann somit Bilder von Bürsten umfassen, die jeweils zumindest einen der zuvor genannten Defekte an einer Bürste zeigen.

Bei einer Ausführungsform des Verfahrens ist vorgesehen, dass zumindest ein Bild einer zu prüfenden Bürste aufgenommen und die Bürste von dem Klassifikator, insbesondere auf Basis aus dem Bild extrahierter Merkmale der Bürste, als defekte oder intakte Bürste klassifiziert wird.

Ein Ergebnis der von dem Klassifikator vorgenommenen Klassifikation kann als Prüfungsergebnis ausgegeben werden. Dies kann beispielsweise über eine Ausgabeeinheit einer Prüfvorrichtung erfolgen. Die Prüfvorrichtung kann beispielsweise eine Prüfvorrichtung einer Bürstenherstellungsmaschine sein.

Die Bilder des Trainingsdatensatzes können Bürsten in zumindest einer definierten Ansicht zeigen. Die zumindest eine definierte Ansicht kann beispielsweise eine Seitenansicht sein.

Um eine zuverlässige Prüfung mit Hilfe des trainierten Klassifikators vornehmen zu können, kann es zweckmäßig sein, wenn Bilder der zu prüfenden Bürsten in derselben Ansicht aufgenommen werden, wie die Ansicht, in der die Bilder des Trainingsdatensatzes die Bürsten zeigen.

Um den trainierten Klassifikator weiter zu verbessern, kann es zweckmäßig sein, dem Klassifikator eine Bestätigung und/oder eine Korrektur der von dem Klassifikator vorgenommenen Klassifikation zurückzuspielen.

Bei einer Ausführungsform des Verfahrens kann das Zurückspielen der Korrektur oder Bestätigung der von dem Klassifikator vorgenommenen Klassifikation insbesondere über eine Mensch-Maschinen-Schnittstelle, beispielsweise an einem Computer erfolgen. Bei einer anderen Ausführungsform des Verfahrens kann vorgesehen sein, dass das zuvor beschriebene ergänzende Training, das auch als Feedback-Training bezeichnet werden kann, von einem trainierten Feedback-Klassifikator vorgenommen wird.

Hierbei bildet also der zuerst definierte Klassifikator zusammen mit dem Feedback-Klassifikator eine Klassifikator-Kaskade.

Der Feedback-Klassifikator kann beispielsweise mit einem Trainingsdatensatz trainiert worden sein, der Bilder defekter und/oder intakter Bürsten umfasst, die zuvor mit dem trainierten Klassifikator zutreffend als intakte bzw. defekte Bürsten klassifiziert wurden.

Der Feedback-Klassifikator kann somit mit einem konsolidierten Trainingsdatensatz mit Bildern zutreffend von dem ersten Klassifikator klassifizierten Bürsten trainiert sein.

Auf diese Weise kann über die kaskadierte Klassifikator-Anordnung bestehend aus dem ersten trainierten Klassifikator und dem trainierten Feedback-Klassifikator eine Verbesserung des Klassifikators und damit eine Verbesserung des Prüfungsergebnisses erzielt werden.

Als Klassifikator wird erfindungsgemäß ein KI-basierter, insbesondere ein zum maschinellen Lernen oder Machine-Learning und/oder zum Deep-Learning eingerichteter Klassifikator verwendet. Auch für den zuvor erwähnten Feedback-Klassifikator, der für die Bestätigung und/oder Korrektur der von dem Klassifikator vorgenommenen Klassifikation verwendet werden kann, gilt: Als Feedback-Klassifikator kann ein KI-basierter, insbesondere ein zum maschinellen Lernen oder Machine-Learning und/oder zum Deep-Learning eingerichteter Klassifikator verwendet werden.

Erfindungsgemäß ist vorgesehen, zur Erzeugung der Bilder defekter Bürsten des Trainingsdatensatzes gezielt defekte Bürsten zu produzieren. Hierbei können hinsichtlich wenigstens eines Merkmals defekte Bürsten produziert werden. Die gezielte Produktion defekter Bürsten erfolgt erfindungsgemäß durch Verwendung einer gezielt fehleingestellten Bürstenherstellungsmaschine.

Bilder dieser dann hinsichtlich wenigstens eines Merkmals defekten Bürsten werden mit einer Kamera aufgenommen und im Trainingsdatensatz gespeichert. Auf diese Weise ist es möglich, eine Vielzahl von Bildern defekter Bürsten zu erzeugen und im Trainingsdatensatz zum Training des Klassifikators abzuspeichern. Zudem ist es so möglich, für einen bestimmten Bürstenherstellungsmaschinentyp spezifische Defekte an Bürsten zu erzeugen und diese Defekte in Bildern abzubilden, die dann für den Trainingsdatensatz des Klassifikators verwendet werden können.

Bei einer Ausführungsform des Verfahrens werden von jeder Bürste Bilder aus zumindest zwei unterschiedlichen Bildwinkeln aufgenommen. Hierbei können die mit einer fehleingestellten Bürstenherstellungsmaschine gezielt defekt produzierten Bürsten bei der Aufnahme der Bilder oder zur Aufnahme der Bilder mit einer Drehvorrichtung, beispielsweise einer weiter unten noch näher erläuterten Bürstenherstellungsmaschine, gedreht werden. Auch dies begünstigt eine besonders effiziente Erzeugung des Trainingsdatensatzes.

Zur Fehleinstellung der Bürstenherstellungsmaschine im Verfahrensschritt vor Erzeugung des Trainingsdatensatzes ist es möglich, die Bürstenherstellungsmaschine in einzelnen oder mehreren Betriebsparametern so einzustellen, dass gezielt defekte Bürsten produziert werden. Beispielsweise ist es möglich, Borstenfilamente mit einer von einer Soll-Länge abweichenden Ist-Länge bei der Produktion der Bürsten zu verwenden. Ferner ist es möglich, eine Schneidvorrichtung zum Kürzen von Borsten an einem Bürstenkopf produzierter Bürsten so einzustellen, dass die Borsten zu kurz abgeschnitten werden, also im Borstenbesatz der fertigen Bürste eine von einer Soll-Länge abweichende Ist-Länge aufweisen.

Ferner ist es beispielsweise denkbar, eine Handhabungsvorrichtung und/oder eine Klemmvorrichtung der Bürstenherstellungsmaschine mit einem von einem Soll-Arbeitsdruck abweichenden Arbeitsdruck zu betreiben und dadurch bewusst Beschädigungen an den Bürsten zu erzeugen, die sich dann als Defekte in den aufgenommenen Bildern des Trainingsdatensatzes zeigen.

Weitere Ansatzpunkte zur Fehleinstellung einer Bürstenherstellungsmaschine können sich dem Fachmann aus seinem Fachwissen erschließen.

Zur Lösung der Aufgabe wird auch eine Prüfvorrichtung mit Mitteln vorgeschlagen, durch die die Prüfvorrichtung zur Durchführung des erfindungsgemäßen Verfahrens ausgebildet ist.

Bei der Prüfvorrichtung ist erfindungsgemäß vorgesehen, dass die Prüfvorrichtung als Mittel zumindest einen Klassifikator, eine Steuereinheit, zumindest eine Kamera, zumindest eine Ausgabeeinheit und zumindest eine Datenbank aufweist.

Erfindungsgemäß ist vorgesehen, dass die Prüfvorrichtung als Mittel zumindest eine Drehvorrichtung zum Drehen der Bürsten bei einer Aufnahme von Bildern der Bürsten aufweist.

Die Datenbank kann beispielsweise zumindest zeitweise mit der Steuereinheit und/oder mit dem Klassifikator verbunden sein und/oder einen Trainingsdatensatz und/oder einen oder den Klassifikator beinhalten.

Zur Lösung der Aufgabe wird schließlich auch eine Bürstenherstellungsmaschine mit einer Prüfvorrichtung nach einem der auf eine Prüfvorrichtung gerichteten Ansprüche vorgeschlagen.

Zur Lösung der Aufgabe wird auch ein Produktionsverbund mit zumindest zwei Bürstenherstellungsmaschinen nach dem auf eine solche Bürstenherstellungsmaschine gerichteten Anspruch vorgeschlagen. Die Bürstenherstellungsmaschinen können zumindest zeitweise über eine Datenverbindung, insbesondere über zumindest eine vorzugsweise cloudbasierte Datenbank miteinander verbunden sein.

Über die Datenverbindung können die Bürstenherstellungsmaschinen und ihre Prüfvorrichtungen Trainingsdatensätze beziehen und/oder untereinander austauschen. Ferner ist es möglich, über die Datenverbindung zwischen den zumindest zwei Bürstenherstellungsmaschinen des Produktionsverbundes auch Informationen bezüglich des zuvor bereits erläuterten Feedback-Trainings austauschen, um die Leistungsfähigkeit ihrer Klassifikatoren fortlaufend zu erhöhen.

Ferner ist es möglich, den Bürstenherstellungsmaschinen des Produktionsverbunds über die Datenbank zumindest einen trainierten Klassifikator bereitzustellen, auf den die im Produktionsverbund organisierten Bürstenherstellungsmaschinen bei Bedarf zurückgreifen können, um das zuvor erläuterte Verfahren zur Qualitätsprüfung von Bürsten durchzuführen.

Nachstehend sind Ausführungsbeispiele der Erfindung anhand der Zeichnung nicht näher erläutert. Die Erfindung ist nicht auf die in den Figuren gezeigten Ausführungsbeispiele beschränkt, weitere Ausführungsbeispiele ergeben sich durch Kombination der Merkmale einzelner oder mehrerer Schutzansprüche untereinander und/oder in Kombination einzelner oder mehrerer Merkmale der Ausführungsbeispiele.

Es zeigen:
- Fig. 1: eine perspektivische Ansicht einer Bürstenherstellungsmaschine mit einer Prüfvorrichtung, die zur Durchführung des erfindungsgemäßen Verfahrens eingerichtet ist,
- Fig. 2: eine schematische Darstellung zur Veranschaulichung der Erzeugung eines Trainingsdatensatzes zum Training des Klassifikators,
- Fig. 3: eine schematische Darstellung zur Veranschaulichung, dass beispielsweise der Trainingsdatensatz und/oder ein damit trainierter Klassifikator in einer cloudbasierten Datenbank bereitgestellt werden kann,
- Fig. 4: eine schematisch Darstellung zur Veranschaulichung des Trainings des Klassifikators mit einem aus einer cloud-basierten Datenbank bezogenen Trainingsdatensatz,
- Fig. 5: eine schematische Darstellung zur Veranschaulichung eines Feedback-Trainings des trainierten Klassifikators durch Bestätigung und/oder Korrektur der von dem Klassifikator vorgenommenen Klassifikationen durch einen geschulten Bediener an einer Mensch-Maschine-Schnittstelle, sowie
- Fig. 6: eine Darstellung zur Veranschaulichung eines Produktionsverbundes aus insgesamt sechs über eine cloud-basierte Datenbank und entsprechende Datenverbindungen miteinander verbundene Bürstenherstellungsmaschine.

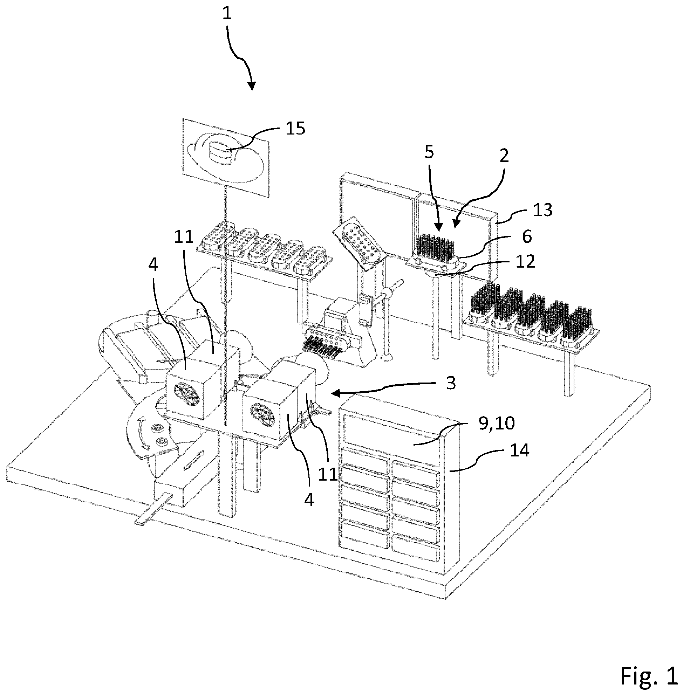

Fig. 1 zeigt eine im Ganzen mit 1 bezeichnete Bürstenherstellungsmaschine zur Herstellung von Bürsten 2. Zur Durchführung einer Qualitätsprüfung der produzierten Bürsten 2 weist die Bürstenherstellungsmaschine 1 eine Prüfvorrichtung 3 auf.

Die Prüfvorrichtung 3 ist mit Mitteln ausgestattet, durch die sie zur Durchführung des nachfolgend beschriebenen Verfahrens zur Qualitätsprüfung von Bürsten 2 eingerichtet ist.

Kern des Verfahrens zur Qualitätsprüfung der Bürsten 2 ist die Verwendung eines Klassifikators 4 der Prüfvorrichtung 3. Der Klassifikator 4 ist dazu eingerichtet, zu prüfende Bürsten 2 anhand von Bildern der zu prüfenden Bürsten 2 als defekte Bürsten zu klassifizieren.

Um den Klassifikator 4 zu dieser Qualitätsprüfung zu befähigen, wird der Klassifikator 4 vor Durchführung der Qualitätsprüfung mit einem Trainingsdatensatz 17 trainiert, der Bilder defekter Bürsten 2 umfasst.

Die Bilder des Trainingsdatensatzes 17 zeigen Bürsten 2, die zumindest einen Defekt im Borstenbesatz 5 oder auch zumindest ein Defekt an einem Bürstenkopf und/oder an einem Bürstenkörper 6 und/oder an einem Bürstengriff und/oder an einem Bürstenstiel der Bürsten 2 zeigen.

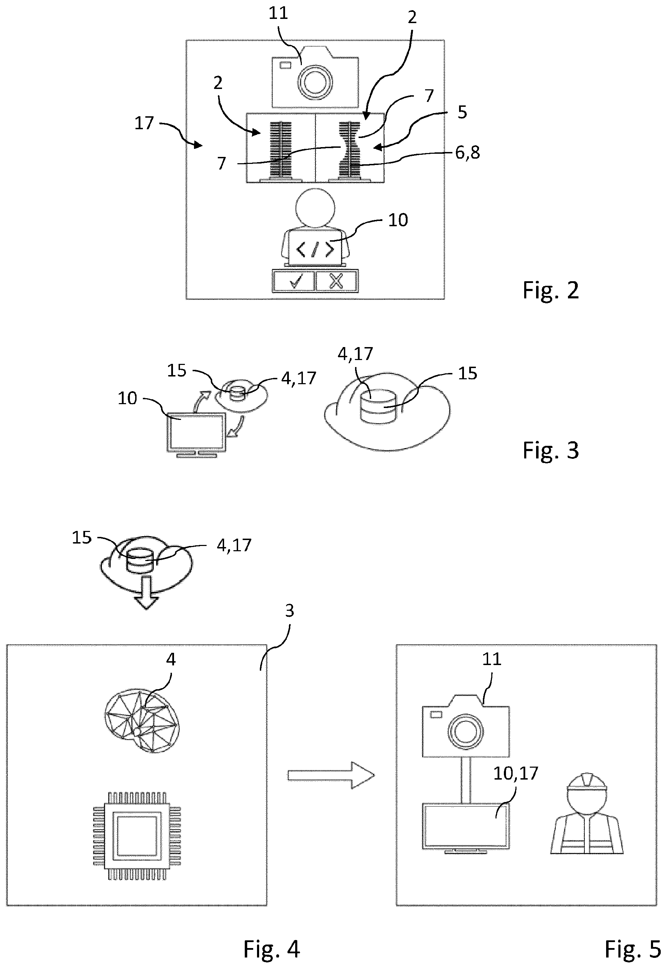

Fig. 2 zeigt zwei Bilder von Bürsten 2, die als Rundbürsten ausgebildet sind. Das in Fig. 2 rechte der beiden Bilder zeigt dabei eine Bürste 2, die einen Defekt 7 im Borstenbesatz 5 aufweist.

Die Bürstenkörper 6 der Bürsten 2, die in Fig. 2 dargestellt sind, bestehen aus einem Stiel, der aus miteinander verdrehten Drahtabschnitten gebildet ist. Der Stiel bildet gleichzeitig auch einen Bürstengriff dieser Art von Bürsten 2.

Der Trainingsdatensatz 17, der durch die beiden Bilder von Bürsten 2 in Fig. 2 veranschaulicht wird, umfasst neben Bildern defekter Bürsten 2 auch Bilder intakter Bürsten 2. Das linke der beiden Bilder in Fig. 2 zeigt eine intakte Bürste 2.

Der Klassifikator 4 ist nach dem Training mit dem Trainingsdatensatz 17 dazu eingerichtet, zu prüfende Bürsten 2 anhand von Bildern der Bürsten 2 als intakte Bürsten bzw. als defekte Bürsten zu klassifizieren.

Zum Training des Klassifikators 4 können Merkmale aus dem Trainingsdatensatz 17 extrahiert werden, die Defekte 7 von Bürsten 2 beispielsweise im Borstenbesatz, am Bürstenkopf, am Bürstenkörper und/oder am Bürstengriff und/oder am Bürstenstiel repräsentieren. Enthält der Trainingsdatensatz 17 auch Bilder intakter Bürsten 2, so wie bei dem in den Figuren veranschaulichten Ausführungsbeispiel, können aus dem Trainingsdatensatz 17 zum Training des Klassifikators 4 auch Merkmale extrahiert werden, die intakte Bürsten 2 repräsentieren.

Fig. 2 verdeutlicht, dass ein Defekt 7 im Borstenbesatz 5 einer Bürste 2 beispielsweise eine von einer Soll-Form abweichende Form des Borstenbesatzes 5 sein kann.

Die Abweichung von der Soll-Form des Borstenbesatzes 5 kann beispielsweise in einer von einer Soll-Borstendichte abweichenden Borstendichte, in einer von einer Soll-Ausrichtung von Borsten abweichenden Borstenausrichtung und/oder in einer von einer Soll-Länge abweichenden Borstenlänge begründet sein.

Andere Abweichungen von einer Soll-Ausprägung des Borstenbesatzes können ebenfalls Defekte 7 darstellen, die auf Bildern des Trainingsdatensatzes 17 zum Training des Klassifikators 4 erkennbar sind. So ist es beispielsweise auch möglich, eine Abweichung von einer Soll-Farbgebung und/oder von einer Soll-Farbverteilung als Defekte 7 in den Bildern defekter Bürsten 2 im Trainingsdatensatz 17 zu zeigen.

Ein Defekt 7 am Bürstenkopf, am Bürstenkörper 6 und/oder am Bürstengriff und/oder am Bürstenstiel kann beispielsweise durch eine von einer Soll-Geometrie des Bürstenkopfes, des Bürstenkörpers und/oder des Bürstengriffs abweichende Ist-Geometrie sein. Als derartiger Defekt ist es beispielsweise vorstellbar, dass in den zuvor genannten Teilen oder Bereichen der Bürsten 2 eine Delle, Vertiefung, Beschädigung und/oder von einer Soll-Oberflächengüte abweichende Oberflächengüte und/oder eine Verformung und/oder eine Verbiegung und/oder eine von einer Soll-Färbung abweichende Färbung vorhanden ist.

Für ein möglichst umfassendes Training des Klassifikators 4 kann es vorteilhaft sein, wenn möglichst viele der zuvor genannten Defekte 7 in möglichst vielen unterschiedlichen Ausprägungen auf den Bildern des Trainingsdatensatzes zu erkennen sind, die defekte Bürsten 2 wiedergeben.

Bei den in Fig. 2 stark schematisiert dargestellten RundBürsten kann ein möglicher Defekt 7 beispielsweise auch in einer Beschädigung des Bürstenstiels 8 der jeweiligen Rund-Bürste bestehen. Ein Defekt im oder am Bürstenstiel 8 kann beispielsweise eine Verbiegung und/oder eine Abweichung von einer Soll-Abmessung des Bürstenstiels 8 sein, beispielsweise eine Abweichung von einem Soll-Durchmesser und/oder einer Soll-Länge.

Bei der Durchführung des Verfahrens wird zunächst zumindest ein Bild einer zu prüfenden Bürste 2 aufgenommen und die Bürste 2 von dem zuvor trainierten Klassifikator 4, beispielsweise auf Basis aus dem Bild extrahierter Merkmale der Bürste 2 als defekte oder intakte Bürste 2 klassifiziert.

Ein Ergebnis der von dem Klassifikator 4 vorgenommenen Klassifikation wird dann als Prüfungsergebnis ausgegeben. Dies erfolgt über eine Ausgabeeinheit 9 der Prüfvorrichtung 3 der Bürstenherstellungsmaschine 1. Zu diesem Zweck kann die Ausgabeeinheit 9 ein wahrnehmbares Signal, beispielsweise ein akustisches und/oder optisches Signal, ausgeben.

Die Bilder des Trainingsdatensatzes 17 können Bürsten 2 in zumindest einer definierten Ansicht zeigen, beispielsweise in einer Seitenansicht.

Die Bilder der zu prüfenden Bürsten 2 werden bei der eigentlichen Qualitätsprüfung dann in derselben Ansicht aufgenommen, in der auch die Bilder des Trainingsdatensatzes 17 die Bürsten 2 wiedergeben.

Fig. 5 repräsentiert ein sogenanntes Feedback-Training des bereits trainierten Klassifikators 4. Während dieses Feedback-Trainings wird dem Klassifikator 4 eine Bestätigung oder eine Korrektur der von dem Klassifikator 4 zuvor vorgenommenen Klassifikationen von Bürsten 2 als defekte oder intakte Bürsten zurückgespielt, um den Klassifikator 4 weiter zu trainieren und so seine Fähigkeiten zur korrekten Klassifikation zu prüfender Bürsten 2 zu verbessern.

Bei dem in Fig. 5 gezeigten Ausführungsbeispiel geschieht dies über eine Mensch-Maschinen-Schnittstelle 10, hier über einen Computer.

Möglich ist es auch, einen trainierten Feedback-Klassifikator zu verwenden, so wie es bereits im allgemeinen Teil der Beschreibung näher erläutert wurde.

Der Klassifikator 4 und auch ein zum Feedback-Training möglicherweise verwendeter Feedback-Klassifikator ist jeweils ein KI-basierter Klassifikator, der zum maschinellen Lernen und/oder zum Deep-Learning eingerichtet ist.

Zur Erzeugung der Bilder defekter Bürsten 2 des Trainingsdatensatzes werden gezielt defekte Bürsten 2 produziert. Dies geschieht mit einer fehleingestellten Bürstenherstellungsmaschine 1. Bilder dieser Bürsten 2, die dann aufgrund der Fehleinstellung der Bürstenherstellungsmaschine 1 diverse Defekte 7 aufweisen können, werden dann mit einer Kamera 11 der Prüfvorrichtung 3 aufgenommen und im Trainingsdatensatz 17 gespeichert.

Von jeder Bürste 2 können dabei Bilder aus zumindest zwei unterschiedlichen Bildwinkeln aufgenommen werden.

Zu diesem Zweck weist die Bürstenherstellungsmaschine 1 gemäß Fig. 1 eine Drehvorrichtung 12 auf, mit der die Bürsten 2 bei der Aufnahme der Bilder gedreht werden können. Die Drehvorrichtung 12 der Bürstenherstellungsmaschine 1 ist dabei so angeordnet, dass die an der Drehvorrichtung 12 gehaltenen Bürsten 2 mit einer Beleuchtungseinheit 13 von hinten beleuchtet werden. Die Drehvorrichtung 12 ist somit zwischen der Beleuchtungseinheit 13 und der zumindest einen Kamera 11 der Bürstenherstellungsmaschine 1 angeordnet.

Die Prüfvorrichtung 3 weist ferner eine Steuereinheit 14 auf, mit der beispielsweise die Drehvorrichtung 12 und die Kamera 11 ansteuerbar sind.

Je nach Ergebnis der von dem Klassifikator 4 vorgenommenen Klassifikation, das gleichzeitig das Ergebnis der Qualitätsprüfung darstellt, kann die Steuereinheit 14 der Prüfvorrichtung 3 auch die Ausgabeeinheit 9 ansteuern.

Die Prüfvorrichtung 3 ist ferner über eine Datenverbindung zumindest zeitweise mit einer Datenbank 15 verbunden, aus der beispielsweise ein Bürstentyp-spezifischer Trainingsdatensatz und/oder ein KI-Modell für den Klassifikator 4 geladen werden können.

Ferner ist es möglich, einen mit der Bürstenherstellungsmaschine 1 und ihrer Prüfvorrichtung 3 erzeugten Trainingsdatensatz 17 in der Datenbank 15 zu hinterlegen und anderen Bürstenherstellungsmaschinen 1 und ihren Prüfvorrichtungen 3 zum Training ihrer Klassifikatoren 4 bereitzustellen. Ferner ist es möglich, Bürstenherstellungsmaschinen 1 und ihren Prüfvorrichtungen 3 auf diese Weise auch bereits trainierte Klassifikatoren 4 zur Verfügung zu stellen.

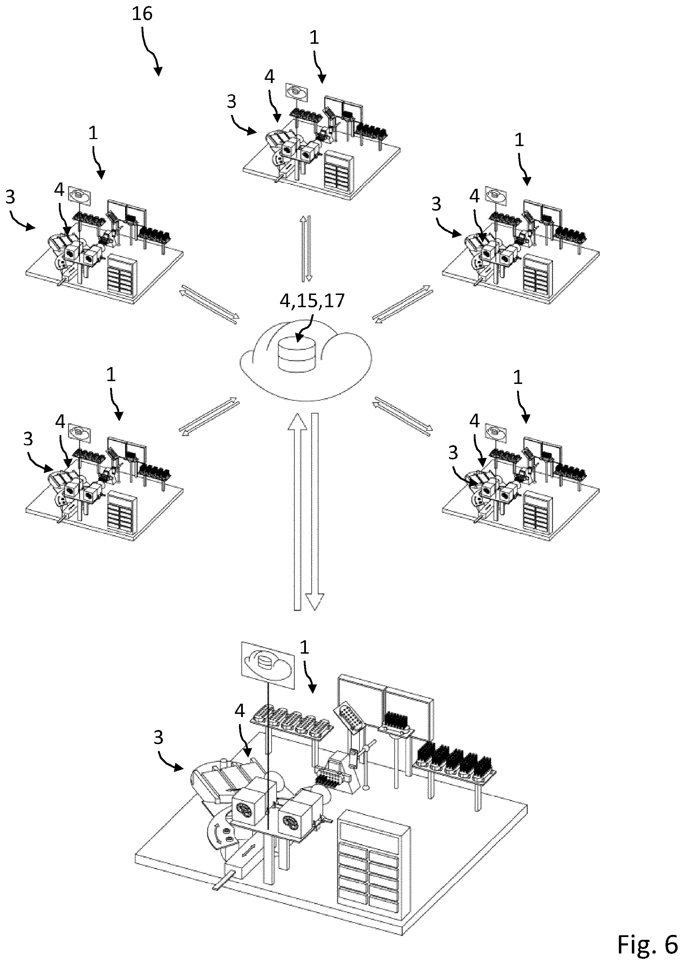

Gemäß Fig. 6 können mehrere Bürstenherstellungsmaschinen 1 in einem Produktionsverbund 16 organisiert sein.

Der in Fig. 6 gezeigte Produktionsverbund 16 umfasst insgesamt sechs Bürstenherstellungsmaschinen 1, die jeweils eine Prüfvorrichtung 3 aufweisen. Die Bürstenherstellungsmaschinen 1 sind zumindest zweitweise über eine Datenverbindung und eine cloud-basierte Datenbank 15 miteinander verbunden.

Über die cloud-basierte Datenbank 15 können die Bürstenherstellungsmaschinen 1 und ihre Prüfvorrichtungen 3 Trainingsdatensätze 17 und/oder bereits trainierte Klassifikatoren 4 austauschen bzw. können den

Bürstenherstellungsmaschinen 1 und ihren Prüfvorrichtungen 3 Trainingsdatensätze 17 und/oder auf spezifische Bürstentypen speziell trainierte Klassifikatoren 4 zur Verfügung gestellt werden.

Auch der zuvor bereits erwähnte Feedback-Klassifikator kann beispielsweise in der cloud-basierten Datenbank 15 hinterlegt sein.

Die Erfindung befasst sich mit Verbesserungen auf dem Gebiet der Bürstenherstellung. Hierzu wird unter anderem ein Verfahren zur Qualitätsprüfung von Bürsten 2 vorgeschlagen, bei dem ein trainierter, vorzugsweise KI-basierter, Klassifikator 4 eingesetzt wird. Nach einem entsprechenden Training mit einem Trainingsdatensatz, der Bilder defekter Bürsten zeigt, ist der Klassifikator 4 dazu eingerichtet, zu prüfende Bürsten 2 anhand von Bildern der Bürsten 2 als defekte Bürsten zu klassifizieren.

### Bezugszeichenliste

- 1: Bürstenherstellungsmaschine
- 2: Bürste
- 3: Prüfvorrichtung
- 4: Klassifikator
- 5: Borstenbesatz
- 6: Bürstenkörper
- 7: Defekt
- 8: Bürstenstiel
- 9: Ausgabeeinheit
- 10: Mensch-Maschinen-Schnittstelle, insbesondere Computer
- 11: Kamera
- 12: Drehvorrichtung
- 13: Beleuchtungseinheit
- 14: Steuereinheit
- 15: Datenbank
- 16: Produktionsverbund
- 17: Trainingsdatensatz

## Patentansprüche

1. Verfahren zur Vorbereitung und Durchführung einer Qualitätsprüfung von Bürsten (2), insbesondere von Zahnbürsten und/oder Rundbürsten, bei der Produktion von Bürsten (2) unter Verwendung eines KI-basierten Klassifikators (4), wobei der Klassifikator (4) dazu eingerichtet ist, zu prüfende Bürsten (2) anhand von Bildern der zu prüfenden Bürsten (2) als defekte Bürsten zu klassifizieren, **dadurch gekennzeichnet, dass** der Klassifikator (4) vor Durchführung der Qualitätsprüfung mit einem Trainingsdatensatz trainiert wird, der Bilder defekter Bürsten (2) umfasst, wobei zur Erzeugung der Bilder defekter Bürsten (2) des Trainingsdatensatzes gezielt defekte Bürsten (2) mit einer gezielt fehleingestellten Bürstenherstellungsmaschine (1) produziert, Bilder dieser Bürsten (2) mit einer Kamera (11) aufgenommen und im Trainingsdatensatz gespeichert werden.

2. Verfahren nach Anspruch 1, wobei die Bilder des Trainingsdatensatzes Bürsten (2) zeigen, die zumindest einen Defekt in einem Borstenbesatz (5), an einem Bürstenkopf und/oder an einem Bürstenkörper (6) und/oder an einem Bürstengriff aufweisen.

3. Verfahren nach einem der vorherigen Ansprüche, wobei der Trainingsdatensatz Bilder intakter Bürsten (2) umfasst, und/oder wobei der Klassifikator (4) dazu eingerichtet ist, zu prüfende Bürsten (2) anhand von Bildern der Bürsten (2) als intakte Bürsten und/oder als defekte Bürsten zu klassifizieren.

4. Verfahren nach einem der vorherigen Ansprüche, wobei aus dem Trainingsdatensatz Merkmale extrahiert werden, die Defekte (7) im Borstenbesatz und/oder am Bürstenkopf und/oder am Bürstenkörper und/oder am Bürstengriff repräsentieren, und/oder wobei aus dem Trainingsdatensatz Merkmale extrahiert werden, die intakte Bürsten (2) repräsentieren.

5. Verfahren nach einem der vorherigen Ansprüche, wobei ein Defekt (7) im Borstenbesatz (5) eine von einer Soll-Form abweichende Form des Borstenbesatzes (5), eine von einer Soll-Borstendichte abweichende Borstendichte, eine von einer Soll-Ausrichtung von Borsten abweichende Borstenausrichtung, vorzugsweise in Bezug auf einen Bürstenkopf und/oder einen Bürstenkörper und/oder einen Bürstengriff der Bürsten, und/oder eine von einer Soll-Länge abweichende Borstenlänge und/oder eine von einer Soll-Farbgebung abweichende Farbgebung und/oder von einer Soll-Farbverteilung im Borstenbesatz abweichende Farbverteilung ist.

6. Verfahren nach einem der vorherigen Ansprüche, wobei ein Defekt am Bürstenkopf und/oder am Bürstenkörper (6) und/oder am Bürstengriff eine von einer Sollgeometrie des Bürstenkopfes und/oder des Bürstenkörpers (6) und/oder des Bürstengriffs abweichende Ist-Geometrie, insbesondere eine Delle, Vertiefung, Beschädigung und/oder eine von einer Soll-Oberflächengüte abweichende Oberflächengüte und/oder eine Verformung und/oder eine Verbiegung, und/oder eine von einer Soll-Färbung abweichende Färbung ist.

7. Verfahren nach einem der vorherigen Ansprüche, wobei zumindest ein Bild einer zu prüfenden Bürste (2) aufgenommen und die Bürste (2) von dem Klassifikator (4), insbesondere auf Basis aus dem Bild extrahierter Merkmale der Bürste (2), als defekte oder intakte Bürste (2) klassifiziert wird.

8. Verfahren nach einem der vorherigen Ansprüche, wobei ein Ergebnis der von dem Klassifikator (4) vorgenommenen Klassifikation als Prüfungsergebnis ausgegeben wird, insbesondere über eine Ausgabeeinheit (9) einer Prüfvorrichtung (3), vorzugsweise einer Bürstenherstellungsmaschine (1).

9. Verfahren nach einem der vorherigen Ansprüche, wobei die Bilder des Trainingsdatensatzes Bürsten (2) in zumindest einer definierten Ansicht zeigen, insbesondere in Seitenansicht, und/oder wobei Bilder der zu prüfenden Bürsten (2) in derselben Ansicht aufgenommen werden, wie die Ansicht, in der die Bilder des Trainingsdatensatzes die Bürsten (2) zeigen.

10. Verfahren nach einem der vorherigen Ansprüche, wobei dem Klassifikator (4) eine Bestätigung oder eine Korrektur der von dem Klassifikator (4) vorgenommenen Klassifikation zurückgespielt wird, insbesondere über eine Mensch-Maschinen-Schnittstelle (10) und/oder über einen trainierten Feedback-Klassifikator.

11. Verfahren nach einem der vorherigen Ansprüche, wobei als Klassifikator (4) ein zum maschinellen Lernen und/oder zum Deep-Learning eingerichteter Klassifikator verwendet wird.

12. Verfahren nach einem der vorherigen Ansprüche, wobei zur Erzeugung der Bilder defekter Bürsten (2) des Trainingsdatensatzes von jeder gezielt defekt produzierten Bürste (2) Bilder aus zumindest zwei unterschiedlichen Bildwinkeln aufgenommen und im Trainingsdatensatz gespeichert werden, insbesondere wobei die Bürsten (2) bei der Aufnahme der Bilder mit einer Drehvorrichtung (12) gedreht werden.

13. Prüfvorrichtung (3) mit Mitteln, durch die die Prüfvorrichtung (3) zur Durchführung des Verfahrens nach einem der vorherigen Ansprüche eingerichtet ist, wobei die Prüfvorrichtung (3) als Mittel einen Klassifikator (4), eine Steuereinheit (14), zumindest eine Kamera (11), zumindest eine Ausgabeeinheit (9), zumindest eine Datenbank (15) und zumindest eine Drehvorrichtung (12) zum Drehen der Bürsten (2) bei einer Aufnahme aufweist.

14. Prüfvorrichtung (3) nach dem vorherigen Anspruch, wobei die Datenbank (15) zumindest zeitweise mit der Steuereinheit (14) und/oder mit dem Klassifikator (4) verbunden ist und/oder wobei in der Datenbank (15) ein Trainingsdatensatz und/oder der Klassifikator (4) abgespeichert ist.

15. Bürstenherstellungsmaschine (1) mit einer Prüfvorrichtung (3) nach einem der vorherigen Ansprüche.

16. Produktionsverbund (16) mit zumindest zwei Bürstenherstellungsmaschinen (1) nach dem vorherigen Anspruch, insbesondere wobei die Bürstenherstellungsmaschinen (1) zumindest zeitweise über eine Datenverbindung, insbesondere über eine vorzugsweise cloudbasierte Datenbank (15), miteinander verbunden sind.

## Claims

1. Method for preparing for and carrying out a quality check on brushes (2), in particular toothbrushes and/or round brushes, during the production of brushes (2) using an AI-based classifier (4), wherein the classifier (4) is configured to classify brushes (2) to be checked as defective brushes based on images of the brushes (2) to be checked, **characterized in that** the classifier (4) is trained using a training data set comprising images of defective brushes (2) before carrying out the quality check, wherein, in order to produce the images of defective brushes (2) of the training data set, deliberately defective brushes (2) are produced using a brush production machine (1) which has been deliberately incorrectly adjusted, images of these brushes (2) are captured using a camera (11) and are stored in the training data set.

2. Method according to claim 1, wherein the images of the training data set show brushes (2) which have at least one defect in a set of bristles (5), on a brush head and/or on a brush body (6) and/or on a brush handle.

3. Method according to any one of the preceding claims, wherein the training data set comprises images of intact brushes (2), and/or wherein the classifier (4) is configured to classify brushes (2) to be checked as intact brushes and/or as defective brushes based on images of the brushes (2).

4. Method according to any one of the preceding claims, wherein features which represent defects (7) in the set of bristles and/or on the brush head and/or on the brush body and/or on the brush handle are extracted from the training data set, and/or wherein features which represent intact brushes (2) are extracted from the training data set.

5. Method according to any one of the preceding claims, wherein a defect (7) in the set of bristles (5) is a shape of the set of bristles (5) that deviates from a target shape, a bristle density that deviates from a target bristle density, a bristle alignment that deviates from a target alignment of bristles, preferably in relation to a brush head and/or a brush body and/or a brush handle of the brushes, and/or a bristle length that deviates from a target length and/or a colouration that deviates from a target colouration and/or a colour distribution that deviates from a target colour distribution in the set of bristles.

6. Method according to any one of the preceding claims, wherein a defect on the brush head and/or on the brush body (6) and/or on the brush handle is an actual geometry that deviates from a target geometry of the brush head and/or the brush body (6) and/or the brush handle, in particular a dent, depression, instance of damage and/or a surface quality that deviates from a target surface quality and/or a deformation and/or a bend, and/or a colouring that deviates from a target colouring.

7. Method according to any one of the preceding claims, wherein at least one image of a brush (2) to be checked is captured and the brush (2) is classified by the classifier (4) as a defective or intact brush (2), in particular on the basis of features of the brush (2) extracted from the image.

8. Method according to any one of the preceding claims, wherein a result of the classification carried out by the classifier (4) is output as a test result, in particular by means of an output unit (9) of a checking apparatus (3), preferably a brush production machine (1).

9. Method according to any one of the preceding claims, wherein the images of the training data set show brushes (2) in at least one defined view, in particular in a side view, and/or wherein images of the brushes (2) to be checked are captured in the same view as the view in which the images of the training data set show the brushes (2).

10. Method according to any one of the preceding claims, wherein a confirmation or a correction of the classification carried out by the classifier (4) is played back to the classifier (4), in particular by means of a human-machine interface (10) and/or by means of a trained feedback classifier.

11. Method according to any one of the preceding claims, wherein a classifier configured for machine learning and/or for deep learning is used as the classifier (4) .

12. Method according to any one of the preceding claims, wherein, in order to produce the images of defective brushes (2) of the training data set, images of each intentionally defectively produced brush (2) are captured from at least two different viewing angles and stored in the training data set, in particular wherein the brushes (2) are rotated using a rotary apparatus (12) when the images are being captured.

13. Checking apparatus (3) comprising means by way of which the checking apparatus (3) is configured to carry out the method according to any one of the preceding claims, wherein the checking apparatus (3) comprises as means a classifier (4), a control unit (14), at least one camera (11), at least one output unit (9), at least one database (15) and at least one rotary apparatus (12) for rotating the brushes (2) during capture.

14. Checking apparatus (3) according to the preceding claim, wherein the database (15) is connected to the control unit (14) and/or to the classifier (4) at least temporarily, and/or wherein a training data set and/or the classifier (4) is/are stored in the database (15).

15. Brush production machine (1) comprising a checking apparatus (3) according to any one of the preceding claims.

16. Production network (16) comprising at least two brush production machines (1) according to the preceding claim, in particular wherein the brush production machines (1) are connected to one another at least temporarily by means of a data connection, in particular by means of a preferably cloud-based database (15).

## Revendications

1. Procédé de préparation et de réalisation d'une vérification de qualité de brosses (2), en particulier de brosses à dents et/ou de brosses rondes, lors de la production de brosses (2) en utilisant un classificateur (4) basé sur l'IA, le classificateur (4) étant configuré pour, à l'aide d'images des brosses (2) à vérifier, classer comme brosses défectueuses des brosses (2) à vérifier, **caractérisé en ce que,** avant la réalisation de la vérification de qualité, le classificateur (4) est entraîné avec un jeu de données d'apprentissage qui comprend des images de brosses (2) défectueuses, des brosses (2) intentionnellement défectueuses étant, pour la production des images de brosses (2) défectueuses du jeu de données d'apprentissage, produites avec une machine de fabrication de brosses (1) intentionnellement défectueuse, des images de ces brosses (2) étant enregistrées avec une caméra (11) et mémorisées dans le jeu de données d'apprentissage.

2. Procédé selon la revendication 1, les images du jeu de données d'apprentissage montrant des brosses (2) qui présentent au moins un défaut dans une garniture de brosse (5), sur une tête de brosse et/ou sur un corps de brosse (6) et/ou sur une poignée de brosse.

3. Procédé selon l'une des revendications précédentes, le jeu de données d'apprentissage comprenant des images de brosses (2) intactes, et/ou le classificateur (4) étant configuré pour classifier, à l'aide d'images des brosses (2), comme brosses intactes et/ou comme brosses défectueuses des brosses (2) à vérifier.

4. Procédé selon l'une des revendications précédentes, des caractéristiques étant extraites du jeu de données d'apprentissage, lesquelles représentent des défauts (7) dans la garniture de brosse, et/ou sur la tête de brosse et/ou sur le corps de brosse et/ou sur la poignée de brosse, et/ou des caractéristiques étant extraites du jeu de données d'apprentissage, lesquelles représentent des brosses (2) intactes.

5. Procédé selon l'une des revendications précédentes, un défaut (7) dans la garniture de brosse (5) étant une forme de la garniture de brosse (5) divergeant d'une forme nominale, une densité de brosse divergeant d'une densité de brosse nominale, une orientation de brosse divergeant d'une orientation de brosses nominale, de préférence par rapport à une tête de brosse et/ou à un corps de brosse et/ou à une poignée de brosse des brosses, et/ou une longueur de brosse divergeant d'une longueur nominale et/ou un coloris divergeant d'un coloris nominal et/ou une distribution de couleurs dans la garniture de brosse divergeant d'une distribution de couleurs nominale.

6. Procédé selon l'une des revendications précédentes, un défaut sur la tête de brosse et/ou sur le corps de brosse (6) et/ou sur la poignée de brosse étant une géométrie réelle divergeant d'une géométrie nominale de la tête de brosse et/ou du corps de brosse (6) et/ou de la poignée de brosse, en particulier une bosse, un creux, un dommage et/ou une qualité de surface divergeant d'une qualité de surface nominale, et/ou une déformation et/ou une flexion, et/ou une coloration divergeant d'une coloration nominale.

7. Procédé selon l'une des revendications précédentes, au moins une image d'une brosse (2) à vérifier étant enregistrée, et la brosse (2) étant classifiée par le classificateur (4) en tant que brosse (2) défectueuse ou intacte, en particulier sur la base de caractéristiques de la brosse (2) extraites à partir de l'image.

8. Procédé selon l'une des revendications précédentes, un résultat de la classification effectuée par le classificateur (4) étant produit en tant que résultat de vérification, en particulier par le biais d'une unité de sortie (9) d'un dispositif de vérification (3), de préférence d'une machine de fabrication de brosses (1).

9. Procédé selon l'une des revendications précédentes, les images du jeu de données d'apprentissage montrant des brosses (2) dans au moins une perspective définie, en particulier dans une perspective latérale, et/ou des images des brosses (2) à vérifier étant enregistrées dans la même perspective que la perspective dans laquelle les images du jeu de données d'apprentissage montrent les brosses (2).

10. Procédé selon l'une des revendications précédentes, une confirmation ou une correction de la classification effectuée par le classificateur (4) étant renvoyée au classificateur (4), en particulier par le biais d'une interface homme-machine (10) et/ou par le biais d'un classificateur de rétroaction entraîné.

11. Procédé selon l'une des revendications précédentes, un classificateur configuré pour l'apprentissage automatique et/ou pour le deep-learning étant utilisé en tant que classificateur (4).

12. Procédé selon l'une des revendications précédentes, selon lequel, pour la production des images de brosses (2) défectueuses du jeu de données d'apprentissage, des images de chaque brosse (2) produite de façon intentionnellement défectueuse sont enregistrées à partir d'au moins deux angles d'image différents et sont mémorisées dans le jeu de données d'apprentissage, les brosses (2) étant en particulier tournées avec un dispositif de rotation (12) lors de l'enregistrement des images.

13. Dispositif de vérification (3) avec des moyens à l'aide desquels le dispositif de vérification (3), pour la réalisation du procédé, est configuré selon l'une des revendications précédentes, le dispositif de vérification (3) présentant en tant que moyens un classificateur (4), une unité de commande (14), au moins une caméra (11), au moins une unité de sortie (9), au moins une base de données (15) et au moins un dispositif de rotation (12) pour faire tourner les brosses (2) lors d'un enregistrement.

14. Dispositif de vérification (3) selon la revendication précédente, la base de données (15) étant connectée au moins temporairement à l'unité de commande (14) et/ou au classificateur (4), et/ou un jeu de données d'apprentissage et/ou le classificateur (4) étant mémorisé dans la base de données (15).

15. Machine de fabrication de brosses (1) avec un dispositif de vérification (3) selon l'une des revendications précédentes.

16. Réseau de production (16) avec au moins deux machines de fabrication de brosses (1) selon la revendication précédente, les machines de fabrication de brosses (1) étant en particulier connectées entre elles au moins temporairement par le biais d'une connexion de données, en particulier par le biais d'une base de données (15) basée sur le cloud.
